# EUROPÄISCHE PATENTSCHRIFT

(11) **EP 0 855 580 B1**
(45) Veröffentlichungstag und Bekanntmachung des Hinweises auf die Patenterteilung: **29.10.2008**
(21) Anmeldenummer: 98100956.6
(22) Anmeldetag: 21.01.1998
(51) Int. Cl.: G01F 11/02, B05B 11/00, B65D 47/34

(54) **Flaschenaufsatzdispenser**
Jar mounted dispenser
Distributeur monté sur une bouteille

(30) Priorität: 27.01.1997 DE 19702773
(43) Veröffentlichungstag der Anmeldung: 29.07.1998
(73) Patentinhaber: BRAND GMBH + CO KG, 97877 Wertheim (DE)
(72) Erfinder: Lang, Andreas, 97828 Marktheidenfeld (DE); Kunze, Hubert, Dr., 97892 Kreuzwertheim (DE)
(74) Vertreter: Gesthuysen, von Rohr & Eggert

(56) Entgegenhaltungen:
- DE-A- 3 208 436
- US-A- 3 332 585
- US-A- 3 863 807
- US-A- 4 273 257
- US-A- 4 306 670

## Beschreibung

Die Erfindung betrifft einen Flaschenaufsatzdispenser Flaschenaufsatzdispenser sind aus der Praxis bekannt. Sie kommen insbesondere zum Einsatz, um ein einstellbares Flüssigkeitsvolumen wiederholt aus einer Flasche auszugeben

Notwendiger Bestandteil eines Flaschenaufsatzdispensers ist eine Kolben-Zylinder-Einheit. Bei dem bekannten Flaschenaufsatzdispenser, von dem die Erfindung ausgeht (US-A-4,306,670), ist der Zylinder der Kolben-Zylinder-Einheit in einer Ausnehmung des Ventilgehäuses im Preßsitz gehalten. Der Kolben der Kolben-Zylinder-Einheit ist an seinem oberen Ende mit einem Druckknopf verbunden, an dem eine Innenhülse angeschraubt ist. Die Innenhülse wird von einem am Ventilgehäuse abgestützten Federelement nach oben gedrückt. Die Aufwärtsbewegung des Kolbens mit der Innenhülse wird durch eine den Zylinder koaxial umschließende Außenhülse begrenzt, die auf das Ventilgehäuse aufgeschraubt ist. Der Anschlag für die durch das Federelement verursachte Ausfahrbewegung der Innenhülse befindet sich an einer auf die Außenhülse am oberen Ende aufgeschraubten, auswechselbaren Kappe. Schraubt man die Kappe ab, so kann man den Kolben mitsamt dem Druckknopf und der daran angeschraubten Innenhülse nach oben aus dem Zylinder herausziehen. Dadurch wird das Federelement zugänglich und kann nach oben abgezogen werden. Man kann auch die Außenhülse vom Ventilgehäuse abschrauben und nach oben abziehen. Das ändert aber nichts daran, daß das Federelement nur dann abgenommen werden kann, wenn der Kolben mitsamt der Innenhülse vom Zylinder nach oben abgezogen worden ist.

Es sind auch Flaschenaufsatzdispenser bekannt, bei denen die Kolben-Zylinder-Einheit als Austauschteil konzipiert ist. Bei einem solchen Flaschenaufsatzdispenser ist der Zylinder der Kolben-Zylinder-Einheit am Ventilgehäuse lösbar stationär angebracht. Ein insoweit bekannter Flaschenaufsatzdispenser (US-A-3,863,807) hat eine Kolben-Zylinder-Einheit in Form einer Spritze aus Kunststoff, deren Zylinder durchsichtig oder durchscheinend ausgebildet ist. Am Zylinderboden befindet sich an einer Ansaug- und Ausstoßöffnung eine einstückig angeformte Aufschraubhülse. Diese kann auf ein entsprechendes Gegenstück am Ventilgehäuse aufgeschraubt werden.

Als Austauschteil konzipierte Kolben-Zylinder-Einheiten können kostengünstig durch Spritzgießen aus Kunststoff hergestellt werden. Die Anforderungen an ihre Haltbarkeit sind nicht so hoch wie bei Dispensern mit fest installierten Kolben-Zylinder-Einheiten.

Als Austauschteil konzipierte Kolben-Zylinder-Einheiten eröffnen die Möglichkeit, das Ventilgehäuse des Dispensers je nach auszugebendem Flüssigkeitsvolumen mit verschieden großen Kolben- Zylinder-Einheiten zu bestücken. Auch kann man verschiedenen Arten auszugebender Flüssigkeit eigene Kolben-Zylinder-Einheiten zuordnen und diese bei einem Flüssigkeitswechsel austauschen. Der Arbeitsablauf wird so vereinfacht, und es werden hohe Reinheitsanforderungen mit weniger Aufwand erfüllt.

Eine besondere Bedeutung kommt der Austauschbarkeit der Kolben-Zylinder-Einheiten beim Arbeiten unter sterilen Bedingungen und beim Umgang mit radioaktiven Substanzen zu. Aus Hygienegründen und um der Sicherheit des Arbeitsplatzes willen kann es hier geboten sein, kontaminierte Kolben-Zylinder-Einheiten nicht zu reinigen, sondern vorschriftsmäßig zu entsorgen.

Die bekannten, zuvor diskutierten Flaschenaufsatzdispenser (sowohl US-A-4,306,670 als auch US-A-3,863,807) sind auf Einhandbedienung ausgelegt. Das gemeinhin als Ansaugfeder bezeichnete Federelement wirkt zwischen dem Kolben und dem Zylinder der Kolben-Zylinder-Einheit, um den Kolben zum Ansaugen der Flüssigkeit auszufahren. Zum Ausstoßen der Flüssigkeit wird der Kolben der Kolben-Zylinder-Einheit mit der Hand wieder eingefahren und dabei wird die Ansaugfeder für den nächsten Saughub gespannt.

Bei einem Flaschendispenser mit einer als Austauschteil konzipierten Kolben-Zylinder-Einheit gibt es mit der Ansaugfeder ein Problem.

Bekannt sind einerseits Dispenser, bei denen der Benutzer beim Austausch der Kolben-Zylinder-Einheit die als Ansaugfeder dienende Schraubendruckfeder von der alten Kolben-Zylinder-Einheit abbauen und zwischen dem Kolben und dem Zylinder der neuen Kolben-Zylinder-Einheit einspannen muß. Das erfordert Geschick, Mühe und Zeit. Nur zu leicht kann die Feder wegspringen und verlorengehen. Auch besteht die Gefahr, die Kolben-Zylinder-Einheit zu verschmutzen.

Denkbar wären andererseits Dispenser, bei denen eine jede der als Austauschteil konzipierten Kolben-Zylinder-Einheiten eine eigene Ansaugfeder hat. Das wäre materialaufwendig und kostenträchtig und es ergäbe sich ein zusätzlicher Aufwand beim Entsorgen.

Der zuvor erläuterte Flaschenaufsatzdispenser mit als Austauschteil konzipierter Kolben-Zylinder-Einheit (US-A-3,863,807) zeigt diese Problematik. Dort muß man nicht nur das Federelement, sondern eine komplette Volumeneinstellmechanik mit mehreren Schiebern etc. abbauen, sofern man nicht die gesamte Kolben-Zylinder-Einheit mit allen Anbauteilen austauschen möchte.

Das Problem mit der Ansaugfeder ist nicht zuletzt deshalb gravierend, weil die Feder recht stark sein muß. Die Feder ist beim Austausch der Kolben-Zylinder-Einheit entsprechend schwer zu handhaben, und sie wäre für ein Wegwerfen beim Austausch zu schade.

Aufgabe der Erfindung ist es, den bekannten, eingangs erläuterten Flaschenaufsatzdispenser so auszugestalten und weiterzubilden, daß der Austausch der Kolben-Zylinder-Einheit möglich ist, ohne daß die Ansaugfeder dem Benutzer beim Austauschen der Kolben-Zylinder-Einheit Mühe bereitet.

Die zuvor aufgezeigte Aufgabe ist bei einem Flaschenaufsatzdispenser mit den Merkmalen des Anspruchs 1 gelöst. Das Federelement ist Teil der die Aus- und Einfahrbewegung des Kolbens verursachenden Betätigungseinheit, die insgesamt vom Ventilgehäuse und vom Kolben der Kolben-Zylinder-Einheit gelöst werden kann.

Der Austausch einer Kolben-Zylinder-Einheit kann sich dann folgendermaßen vollziehen:

Zuerst wird die Betätigungsverbindung zwischen der Betätigungseinheit und der alten Kolben- Zylinder-Einheit gelöst. Die Betätigungseinheit wird von dem Ventilgehäuse abgenommen, wodurch die alte Kolben-Zylinder-Einheit zugänglich wird. Die alte Kolben-Zylinder-Einheit wird von dem Ventilgehäuse abgenommen und die neue Kolben-Zylinder-Einheit daran angebracht. Sodann wird eine geeignete Betätigungeinheit an dem Ventilgehäuse angebracht und schließlich die Betätigungsverbindung zwischen der Betätigungseinheit und der neuen Kolben-Zylinder-Einheit hergestellt.

Bei einer bevorzugten Ausführungsform weist die Betätigungseinheit einander koaxial umschließende Hülsen auf, die über den maximalen Hub der Kolben-Zylinder-Einheit Teleskopführung aneinander haben. Ein besonders einfacher Aufbau ergibt sich mit zwei Hülsen, einer Innenhülse und einer Außenhülse. Zwischen den Hülsen ist das Federelement zum Ansaugen eingespannt. Vorzugsweise handelt es sich dabei um eine Schraubendruckfeder.

Bei einer bevorzugten Ausführungsform paßt die Betätigungseinheit in koaxialer Anordnung über die an dem Ventilgehäuse angebrachte Kolben-Zylinder-Einheit.

Die lösbare Betätigungsverbindung zwischen der Betätigungseinheit und der Kolben-Zylinder-Einheit läßt sich vorzugsweise in der maximalen Einfahrstellung der Einheiten herstellen. Letztere ist vorzugsweise eine verriegelte Ruhestellung des Dispensers. Der Dispenser weist in dieser Ruhestellung eine niedrige Bauhöhe auf, die beispielsweise von Vorteil ist, wenn eine Flasche mit dem darauf sitzenden Dispenser in einen Kühlschrank gestellt werden soll. Die Ruhestellung für das Herstellen und Lösen der Betätigungsverbindung heranzuziehen, nutzt die bestehende Verriegelung, und hat den weiteren Vorteil, daß das Füllvolumen der Kolben-Zylinder-Einheit minimal ist.

Bei einer bevorzugten Ausführungsform läßt sich der Ausfahrhub der Betätigungseinheit durch einen Verstellanschlag begrenzen, mit dem eine Einstellung des Ausgabevolumens erfolgt. Der Anschlag kann sich kontinuierlich oder in Stufen verstellen lassen.

Bei der lösbaren Verbindung zwischen dem stationären Teil der Kolben-Zylinder-Einheit und dem Ventilgehäuse handelt es sich vorzugsweise um eine Renkverbindung, z. B. eine Bajonettverbindung, einen Luerlock o. ä. Diese Verbindung ist axial sicher fest und unter Abdichtung einfach und schnell herzustellen und zu lösen.

Bei einer bevorzugten Ausführungsform läßt sich eine der Hülsen der Betätigungseinheit, vorzugsweise die Innenhülse, auf das Ventilgehäuse des Dispensers aufschrauben. Eine andere Hülse der Betätigungseinheit, vorzugsweise die Außenhülse, trägt einen Schieber, der mit dem beweglichen Teil der Kolben-Zylinder-Einheit in lösbaren Halteeingriff geht.

Vorzugsweise hat das bewegliche Teil der Kolben-Zylinder-Einheit wenigstens einen abstehenden Bund größeren Durchmessers und axial dahinter einen Hals kleineren Durchmessers. Der Schieber hat eine Öffnung, durch die der Bund in Lösestellung hindurchpaßt und die sich in Betätigungsrichtung verengt, so daß in Haltestellung der Hals hinein, nicht aber der Bund hindurchpaßt.

Vorzugsweise hat das bewegliche Teil der Kolben-Zylinder-Einheit Bunde beidseits des Halses.

Der Schieber rastet vorzugsweise in Haltestellung und Lösestellung ein.

Entsprechend dem gewünschten Ausgabevolumen kann der erfindungsgemäße Dispenser mit Kolben-Zylinder-Einheiten verschiedener Größe bestückt werden. Bei einer bevorzugten Ausführungsform ist jeder Größe eine Betätigungseinheit zugeordnet, die vorzugsweise eine Skala für das jeweilige Ausgabevolumen hat. Eine falsche Paarung von Kolben-Zylinder-Einheit und Betätigungseinheit könnte zu einem Fehler führen, da die Skalenanzeige nicht mit dem tatsächlichen Ausgabevolumen übereinstimmt. Bei einer bevorzugten Ausführungsform ist daher dafür gesorgt, daß solche falschen Paarungen nicht funktionstüchtig sind. Bunde und Hälse von Kolben-Zylinder-Einheiten verschiedener Größe sind dazu im Durchmesser paarweise verschieden und die Öffnungen in den Schiebern der zugeordneten Betätigungseinheiten entsprechend verschieden groß, derart, daß ein zu großer Bund nicht in die Öffnung hinein und ein zu kleiner Bund durch die Verengung der Öffnung hindurchpaßt.

Bei einer bevorzugten Ausführungsform sind die Hülsen der Betätigungseinheit durchsichtig oder durchscheinend. Der Benutzer kann so sehen, was in der Kolben-Zylinder-Einheit vor sich geht, und die ordnungsgemäße Funktion des Dispensers kontrollieren.

Eine nicht ganz auszuschließende Fehlbedienung des Dispensers beim Abbauen einer Kolben-Zylinder-Einheit von dem Ventilgehäuse besteht darin, daß der Benutzer nicht erst die Betätigungsverbindung zwischen der Betätigungseinheit und der Kolben-Zylinder-Einheit löst, sondern versucht, die Betätigungseinheit mit der daran angekoppelten Kolben-Zylinder-Einheit von den Ventilgehäuse abzubauen. Dabei kommt es zu einem Ansaugen von Flüssigkeit in die Kolben-Zylinder-Einheit. Das kann der Benutzer durch die durchsichtigen Hülsen der Betätigungseinheit hindurch sehen und den Fehler bemerken.

Ein weiteres Sicherheitsmerkmal des erfindungsgemäßen Dispensers ist die Verwendung einer Kolben-Zylinder-Einheit, bei der der Kolben besonders fest in dem Zylinder sitzt.

Spritzen mit einer Kolben-Zylinder-Einheit für Pipettiergeräte werden herkömmlicherweise durch Spritzgießen aus Kunststoff hergestellt. Es ist bekannt, dabei in die Wand der Zylinderlaufbuchse einen umlaufenden Wulst einzuformen, an dem der Kolben in seiner maximalen Ausfahrstellung zum Anschlag kommt.

Beim Zusammenbauen der Spritze wird der Kolben von außen über den Wulst gedrückt. Mit hinreichender Kraftanwendung ist es daher auch möglich, den Kolben über den Wulst aus dem Zylinder herauszuziehen, was ein ungewolltes Herausspritzen von Flüssigkeit zur Folge haben kann.

Im Fall einer solchen Fehlbedienung ist die Spritze zwar zunächst kaputt, doch kann der Benutzer sie reparieren, indem er den Kolben über den Wulst wieder in den Zylinder drückt.

Zur Vermeidung von Fehlbedienungen und zur Verbesserung der Betriebssicherheit werden bei dem erfindungsgemäßen Dispenser Kolben-Zylinder-Einheiten in Form einer Spritze aus Kunststoff verwendet, bei der sich der Kolben nicht aus dem Zylinder herausziehen läßt.

Ein Versuch, bei der erfindungsgemäßen Spritze den Kolben aus dem Zylinder herauszuziehen, möchte daran scheitern, daß die Spritze vorzugsweise an anderer, weniger kritischer Stelle kaputt geht, und zwar vorzugsweise so, daß sie unwiederbringlich funktionsuntüchtig wird, dabei aber dicht bleibt.

Bei einer bevorzugten Ausführungsform ist ein Rückhaltering für den Kolben in den Zylinder der Kolben-Zylinder-Einheit eingelassen. Der Rückhaltering verhindert, daß der Kolben ganz aus dem Zylinder herausgezogen werden kann. Ehe der Benutzer den Kolben über den Rückhaltering aus dem Zylinder herausbekommt, geht die Kolben-Zylinder-Einheit vorzugsweise an anderer, weniger kritischer Stelle kaputt, beispielsweise durch Abreißen der Partie, an der die Betätigungsverbindung mit der Betätigungseinheit hergestellt wird.

Der Rückhaltering kann sich wirksam und unwirksam schalten lassen. Er soll im unwirksamen Zustand den Einbau des Kolbens in den Zylinder und Ausbau des Kolbens aus dem Zylinder ermöglichen.

Bei einer bevorzugten Ausführungsform hat der Kolben einen Kolbenkopf und eine Kolbenstange. Der Zylinder hat einen Boden mit einer Ansaug- und Ausstoßöffnung und eine Zylinderlaufbuchse, in die der Kolbenkopf unter Abdichtung paßt. Die Zylinderlaufbuchse ist an ihrem dem Zylinderboden abgewandten Ende offen, so daß der Kolben darin eingebaut werden kann. Der Rückhaltering für den Kolben liegt vor der Einbauöffnung, und er ist so dimensioniert, daß nicht der Kolbenkopf, wohl aber die Kolbenstange durch den Rückhaltering hindurchpaßt.

Vorzugsweise hat die Kolbenstange in dem Rückhaltering Führung. Das eröffnet die Möglichkeit, eine Spritze ohne angekoppelte Betätigungseinheit zu füllen oder zu entleeren, ohne dabei den Kolben zu verkanten.

Die Spritze ist vorzugsweise so dimensioniert, daß eher die Kolbenstange zerreißt oder von dem Kolbenkopf abreißt oder ein Anschlußverbindungsstutzen der Spritze aus seinem Gegenstück reißt, als daß der Kolbenkopf den Rückhaltering überwindet.

Bei einer bevorzugten Ausführungsform ist der Rückhaltering auf die Zylinderlaufbuchse aufgeklipst oder in die Zylinderlaufbuchse eingeklipst. Auch kann der Rückhaltering mit der Zylinderlaufbuchse verklebt oder verschweißt oder durch nachträgliche Verformung aus der Zylinderlaufbuchse gebildet sein.

Bei einer bevorzugten Ausführungsform hat der Kolben eine Fehlbedienungs-Hubreserve in dem Zylinder, die ein Lösen der Betätigungseinheit von dem Ventilgehäuse ermöglicht, während fehlerhafterweise die Betätigungsverbindung zwischen der Betätigungseinheit und der Kolben-Zylinder-Einheit hergestellt ist, ohne daß der Kolbenkopf dabei den Rückhaltering erreicht. Die Fehlbedienung kann also nicht dazu führen, daß der Kolbenkopf den Rückhaltering mit Kraftuntersetzung erreicht und ihn vielleicht doch überwindet. Vielmehr erreicht der Kolbenkopf den Rückhaltering erst, wenn die Verbindung zwischen der Betätigungseinheit und dem Ventilgehäuse vollständig gelöst ist. Dadurch bemerkt der Benutzer den Kraftanstieg unmittelbar, wenn der Kolbenkopf den Rückhaltering erreicht, und stoppt intuitiv seine Fehlbedienung.

Die Erfindung wird im folgenden anhand eines in der Zeichnung dar gestellten Ausführungsbeispiels näher erläutert. Es zeigen:

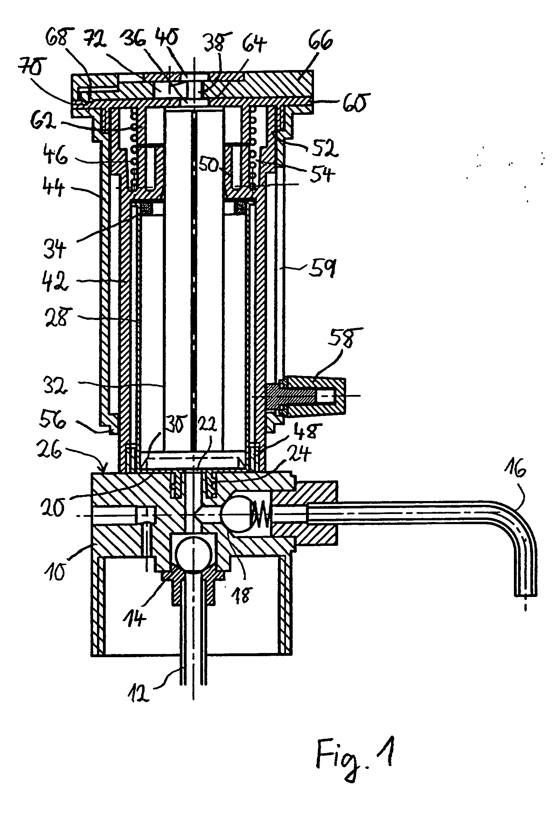

- Fig. 1: die seitliche axiale Schnittansicht eines Flaschenaufsatzdispensers, bei dem eine Betätigungseinheit mit einem Schieber an den Kolben einer Kolben-Zylinder-Einheit angekoppelt wird, in der ganz eingefahrenen Stellung von Betätigungseinheit und Kolben-Zylinder-Einheit und bei in Verriegelungsstellung befindlichem Schieber;
- Fig. 2: die seitliche axiale Schnittansicht des Flaschenaufsatzdispensers in der ganz ausgefahrenen Stellung von Betätigungseinheit und Kolben-Zylinder-Einheit und bei in Lösestellung dargestelltem Schieber, wohlgemerkt einer Lösestellung, die der Schieber im Betrieb so nicht einnimmt;

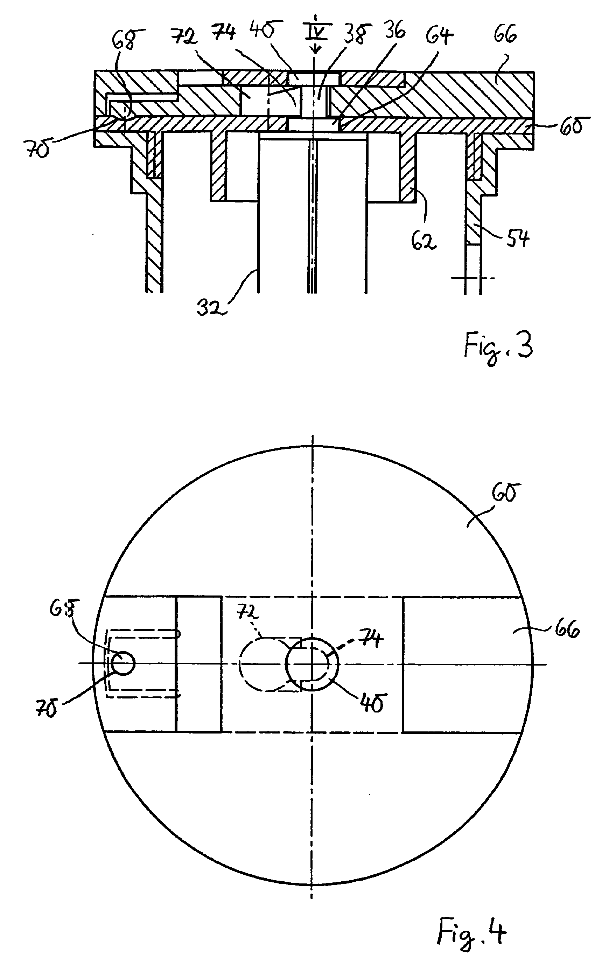

- Fig. 3: das obere Ende der Betätigungseinheit und Kolben-Zylinder-Einheit als vergrößerte Einzelheit von Fig. 1;
- Fig. 4: eine axiale Draufsicht auf das obere Ende von Betätigungseinheit und Kolben-Zylinder-Einheit mit Blick in Richtung IV von Fig. 3;

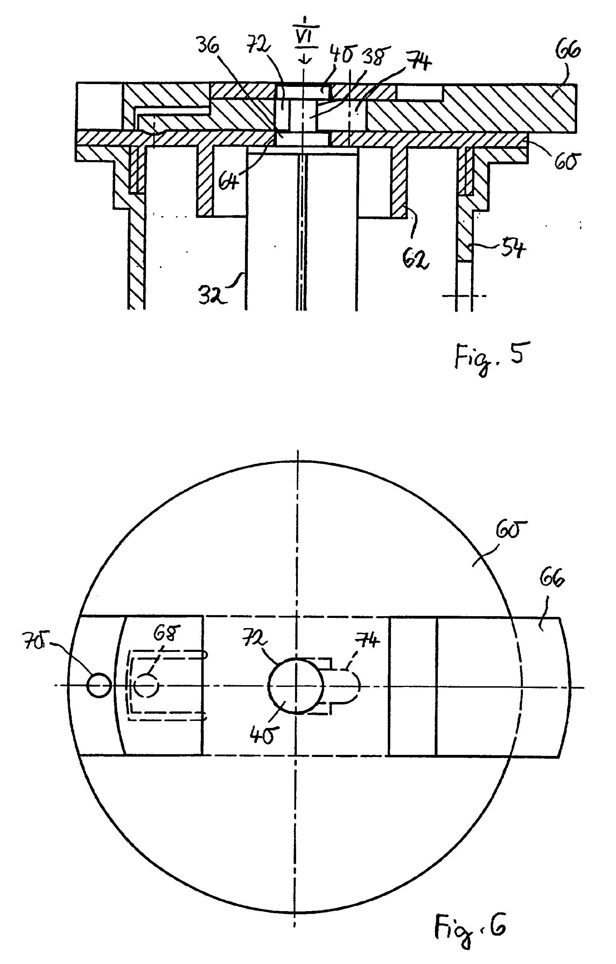

- Fig. 5: das obere Ende der Betätigungseinheit und Kolben-Zylinder-Einheit als vergrößerte Einzelheit von Fig. 2;
- Fig. 6: eine axiale Draufsicht auf das Betätigungseinheit und Kolben-Zylinder-Einheit mit Blick in Richtung VI von Fig. 5;
- Fig. 7: eine Seitenansicht der Kolben-Zylinder-Einheit mit ganz eingefahrenem Kolben;
- Fig. 8: eine Seitenansicht der Kolben-Zylinder-Einheit mit dem vollen Dosierhub entsprechend ausgefahrenem Kolben;
- Fig. 9: eine Seitenansicht der Kolben-Zylinder-Einheit mit in Sicherungs-Anschlagstellung befindlichem Kolben;
- Fig. 10: als vergrößerte Einzelheit von Fig. 8 einen in den Zylinder der Kolben-Zylinder-Einheit eingeklipsten Rückhaltering;
- Fig. 11: ebenso einen auf den Zylinder aufgeklipsten Rückhaltering;
- Fig. 12: eine Seitenansicht des oberen Endes der Kolbenstange einer großen Kolben-Zylinder-Einheit;
- Fig. 13: eine Draufsicht auf den Schieber, mit dem eine Betätigungseinheit an die große Kolben-Zylinder-Einheit angekoppelt wird;
- Fig. 14: eine Seitenansicht des oberen Endes der Kolbenstange einer mittelgroßen Kolben-Zylinder-Einheit;
- Fig. 15: eine Draufsicht auf den Schieber, mit dem eine Betätigungseinheit an die mittelgroße Kolben-Zylinder-Einheit angekoppelt wird;
- Fig. 16: eine Seitenansicht des oberen Endes der Kolbenstange einer kleinen Kolben-Zylinder-Einheit; und
- Fig. 17: eine Draufsicht auf den Schieber, mit dem eine Betätigungseinheit an die kleine Kolben-Zylinder-Einheit angekoppelt wird.

Der Flaschenaufsatzdispenser hat ein Ventilgehäuse 10, das sich auf eine Flasche aufsetzen läßt, deren flüssigen Inhalt der Dispenser ausgibt.

Von dem Ventilgehäuse 10 geht nach unten eine Ansaugleitung 12 ab, vor der ein Ansaugventil 14 liegt. Die Ausgabe der Flüssigkeit erfolgt über eine seitliche Kanüle 16, vor der ein Ausstoßventil 18 liegt. Oben hat das Ventilgehäuse 10 einen Anschluß für eine als Austauschteil konzipierte Kolben-Zylinder-Einheit in Form einer Spritze aus Kunststoff.

Die Spritze hat einen Zylinderboden 20 mit einer mittigen Ansaug- und Ausstoßöffnung 22, die von einem axial nach unten abstehenden zylindrischen Stutzen 24 umgeben ist. Der Stutzen 24 geht mit einer oberen Öffnung des Ventilgehäuses 10 eine abdichtende Luerlock-Verbindung ein.

Die Spritze hat eine kreiszylindrische Laufbuchse 28 für einen Kolben, der aus einem Kolbenkopf 30 und einer Kolbenstange 32 besteht. Der Kolbenkopf 30 sitzt unter Abdichtung axial beweglich in der Zylinderlaufbuchse 28. Die Kolbenstange 32 setzt mittig und axial an dem Kolbenkopf 30 an und steht oben aus der Zylinderlaufbuchse 28 heraus.

Statt wie dargestellt eben, kann der Zylinderboden 20 auch konisch und der Kolbenkopf 30 entsprechend konisch sein.

Das dem Zylinderboden 20 abgewandte Ende der Zylinderlaufbuchse 28 ist für den Einbau des Kolbens offen. Nach erfolgtem Einbau wird ein Rückhaltering 34 für den Kolben in die Einbauöffnung der Zylinderlaufbuchse 28 eingesetzt und mit letzterer dauerhaft verbunden. Der Rückhaltering 34 ist so dimensioniert, daß die Kolbenstange 32 hindurchpaßt.

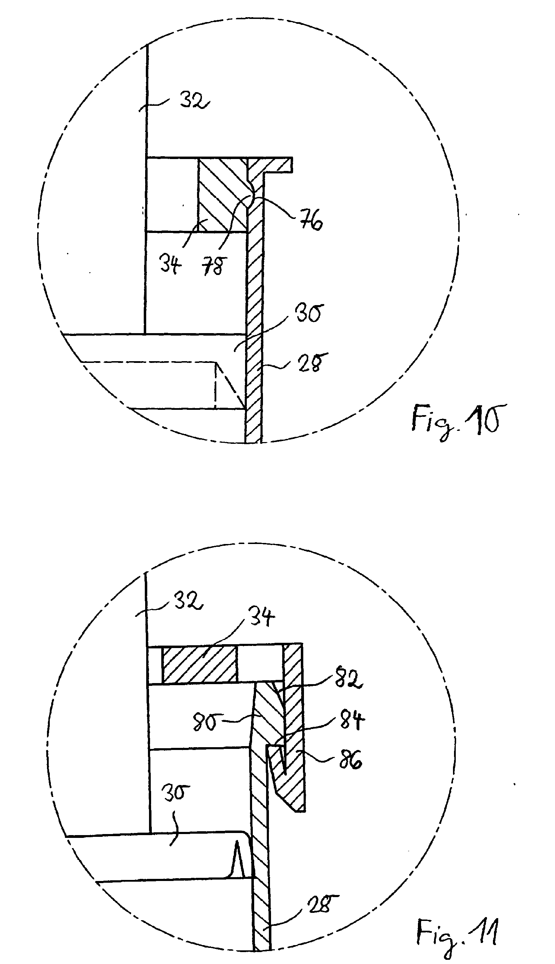

Gemäß Fig. 10 ist der Rückhaltering 34 in die Zylinderlaufbuchse 28 der Kolben-Zylinder-Einheit eingeklipst. Die Zylinderlaufbuchse 28 hat an ihrem Innenmantel eine umlaufende Ringnut 76, und der Rückhaltering 34 an seinem Außenmantel einen umlaufenden Ringwulst 78, der formschlüssig in die Ringnut 76 paßt. Die Ringnut 76 hat ein kreissegmentförmiges Profil und der Ringwulst 78 eine entsprechende ballige Kreiswölbung.

Gemäß Fig. 11 ist der Rückhaltering 34 auf die Zylinderlaufbuchse 28 der Kolben-Zylinder-Einheit aufgeklipst. An die Zylinderlaufbuchse 28 ist ein radial umlaufender, axial und radial nach außen abstehender Haken 80 angeformt, der an seinem Ende außen eine Rampe 82 und dahinter eine Hinterschneidung 84 aufweist. Der Rückhaltering 34 hat am Rand gleichmäßig über den Umfang verteilte Widerhaken 86, die sich unter elastischer Spreizung über die Rampe 82 des Hakens 80 drücken lassen und in dessen Hinterschneidung 84 einfallen.

Am oberen Ende der Kolbenstange 32 befindet sich ein mittiger, axialer Fortsatz, der zum Ankoppeln einer Betätigungseinheit an die Kolbenstange 32 dient. Der Fortsatz ist kreiszylindrisch. Er besteht aus einem unteren abstehenden Bund 36 größeren Durchmessers, einem mittigen Hals 38 kleineren Durchmessers und einem oberen abstehenden Bund 40 wieder größeren Durchmessers.

Die Betätigungseinheit weist eine kreiszylindrische Innenhülse 42 und eine diese koaxial umgebende kreiszylindrische Außenhülse 44 auf. Beide Hülsen 42, 44 bestehen aus durchsichtigem Kunststoff.

Die Hülsen 42, 44 haben aneinander Teleskopführung. Sie sind mit einer als Ansaugfeder dienenden Schraubendruckfeder 36 in Ausfahrrichtung axial vorgespannt. Der maximale axiale Ausfahrhub der Hülsen 42, 44 ist anschlagbegrenzt. Er entspricht dem vollen Dosierhub der Kolben-Zylinder-Einheit.

Die Innenhülse 42 läßt sich mit ihren unteren Ende auf einen zylindrischen Gewindestutzen 48 aufschrauben, der von der Oberseite 26 des Ventilgehäuses 10 nach oben absteht. Der Gewindestutzen 48 hat ein Außengewinde und die Innenhülse 42 ein passendes Innengewinde.

Das obere Ende der Innenhülse 42 bildet unmittelbar oberhalb des Zylinders der in Luerlock-Montagestellung befindlichen Kolben-Zylinder-Einheit eine radiale Schulter mit einem inneren Führungsring 50 kleineren Durchmessers für die Kolbenstange 32 und einem äußeren Führungsring 52 größeren Durchmessers für die Teleskopführung der Außenhülse 44. Der äußere Führungsring 52 steht axial über den inneren Führungsring 50 vor. Das untere Ende der Schraubendruckfeder 46 sitzt in einem Ringraum 54 zwischen den Führungsringen 50, 52.

Die Außenhülse 44 paßt mit radialem Spiel über die Innenhülse 42. Sie verengt sich an ihrem unteren Ende zu einem Kragen 56, der an dem Außenmantel der Innenhülse 42 Führung hat.

An der Außenhülse 44 ist ein Reiter 58 angebracht, der an dem äußeren Führungsring 52 der Innenhülse 42 anschlägt. Der Reiter 58 sitzt in einem axialen Langloch 59 der Außenhülse 44. Er läßt sich in beliebiger Stellung an der Außenhülse 44 festspannen. Der Reiter 58 ermöglicht eine stufenlose Einstellung des axialen Ausfahrhubs der Außenhülse 44 bezüglich der Innenhülse 42, d. h. eine stufenlose Einstellung des Dispenser-Ausgabevolumens.

Zur baulichen Vereinfachung kann die Außenhülse 44 auch eine Stufenverstellung für den Reiter 58 haben, die eine Einstellung des Dispenser-Ausgabevolumens nur in diskreten Schritten ermöglicht (nicht dargestellt). Das hat den Vorteil, daß sich der Reiter bei Betätigung noch schwerer unbeabsichtigt aus seiner Position verschiebt.

Das durch die Ansaugfeder betätigte Anschlagen des Reiters 58 an dem äußeren Führungsring 52 der Innenhülse 42 ist recht abrupt. Es kann sich eine Druckwelle in der angesaugten Flüssigkeit bilden, die das Ausstoßventil 18 des Dispensers eventuell kurz öffnet und einen Tropfen Flüssigkeit austreten läßt. Das zu verhindern, ist das Anschlagen des Reiters 58 in geeigneter Weise gedämpft. Insbesondere kann der Reiter 58 mit einem Puffer aus elastischem Material versehen sein (nicht dargestellt).

Die Außenhülse 44 der Betätigungseinheit ist an ihrem oberen Ende mit einer bündig darin eingelassenen Deckelplatte 60 verschlossen. Der äußere Führungsring 52 der Innenhülse 42 schlägt an der Deckelplatte 60 an, um den Einfahrhub der Kolben-Zylinder-Einheit zu begrenzen.

Von der Unterseite der Deckelplatte 60 steht in koaxialer Anordnung eine Zylinderbuchse 62 ab, um die herum das obere Ende der Schraubendruckfeder 46 liegt. Die Deckelplatte 60 hat eine mittige, kreisrunde Öffnung 64, durch die der Fortsatz am oberen Ende der Kolbenstange 32 der in Luerlock-Montagestellung befindlichen Kolben-Zylinder-Einheit paßt.

An der Oberseite der Deckelplatte 60 ist ein Schieber 66 radial verstellbar geführt. Der Schieber 66 arbeitet mit dem Fortsatz an dem oberen Ende der Kolbenstange 32 der in Luerlock-Montagestellung befindlichen Kolben-Zylinder-Einheit zusammen, um die Außenhülse 44 der Betätigungseinheit wahlweise an die Kolbenstange 32 anzukoppeln - Haltestellung des Schieber 66 - oder davon zu lösen - Lösestellung des Schiebers 66 -.

Der Schieber 66 hat einen Noppen 68, der sowohl in der Haltestellung, als auch in der Lösestellung des Schiebers 66 in eine Vertiefung 70 der Deckelplatte 60 einrastet.

Der Schieber 66 hat eine abschnittsweise kreisrunde Öffnung 72, die in der Lösestellung mit der mittigen Öffnung 64 der Deckelplatte 60 ausgerichtet ist und deren lichte Weite freigibt. Der Schieber 66 paßt in der Lösestellung mit dem kreisrunden Öffnungsabschnitt 72 über die abstehenden Bunde 36, 40 an dem Fortsatz der Kolbenstange 32.

Die Öffnung des Schiebers 66 verengt sich in Betätigungsrichtung zu einem Langloch 74, in das der Hals 38 an dem Fortsatz der Kolbenstange 32 hineinpaßt, nicht aber die abstehenden Bunde 36, 40 hindurchpassen. Der Schieber 66 ergreift in der Haltestellung den Hals 38 zwischen den Bunden 36, 40 und stellt eine axial feste Verbindung zwischen der Kolbenstange 32 der Kolben-Zylinder-Einheit und der Außenhülse 44 der Betätigungseinheit her.

Der Dispenser hat eine Ruhestellung, die die maximale Einfahrstellung des Kolbens in den Zylinder der Kolben-Zylinder-Einheit und zugleich die maximale Einfahrstellung der Außenhülse 44 bezüglich der Innenhülse 42 der Betätigungseinheit ist. In dieser Ruhestellung sind die Innenhülse 42 und die Außenhülse 44 axial miteinander verriegelt (nicht dargestellt). Die Verriegelung kann beispielsweise mit dem Reiter 58 in Ausgabevolumenstellung Null erfolgen. Die Schraubendruckfeder 46 ist in der verriegelten Ruhestellung maximal gespannt.

Zum Austauschen einer Kolben-Zylinder-Einheit wird in der erwähnten Ruhestellung der Schieber 66 der Betätigungseinheit in die Lösestellung gebracht und die Betätigungseinheit von dem Ventilgehäuse 10 des Dispensers abgeschraubt. Sodann wird die Luerlock-Verbindung der alten Kolben-Zylinder-Einheit gelöst, die Luerlock-Verbindung einer neuen Kolben-Zylinder-Einheit hergestellt, eine dazu passende Betätigungseinheit auf das Ventilgehäuse 10 aufgeschraubt und der Schieber 66 in die Haltestellung gebracht, um die Kolbenstange 32 der neuen Kolben-Zylinder-Einheit an die Außenhülse 44 der Betätigungseinheit anzukoppeln.

Sollte der Benutzer fehlerhafterweise beginnen, die Betätigungseinheit von dem Ventilgehäuse 10 abzuschrauben, während eine Kolben-Zylinder-Einheit an die Betätigungseinheit angekoppelt ist, so wird Flüssigkeit in die Kolben-Zylinder-Einheit eingesaugt. Das kann der Benutzer durch die transparenten Hülsen 42, 44 sehen und seinen Fehler bemerken.

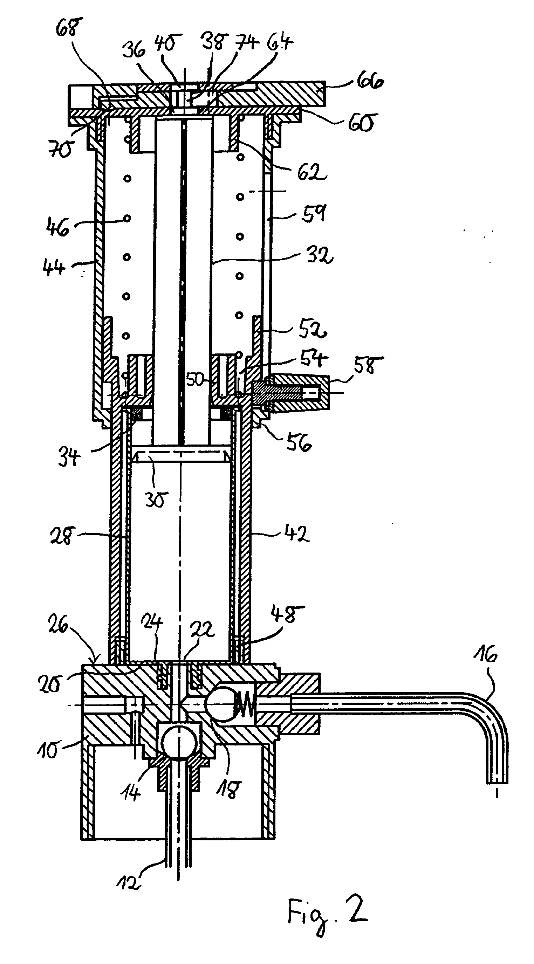

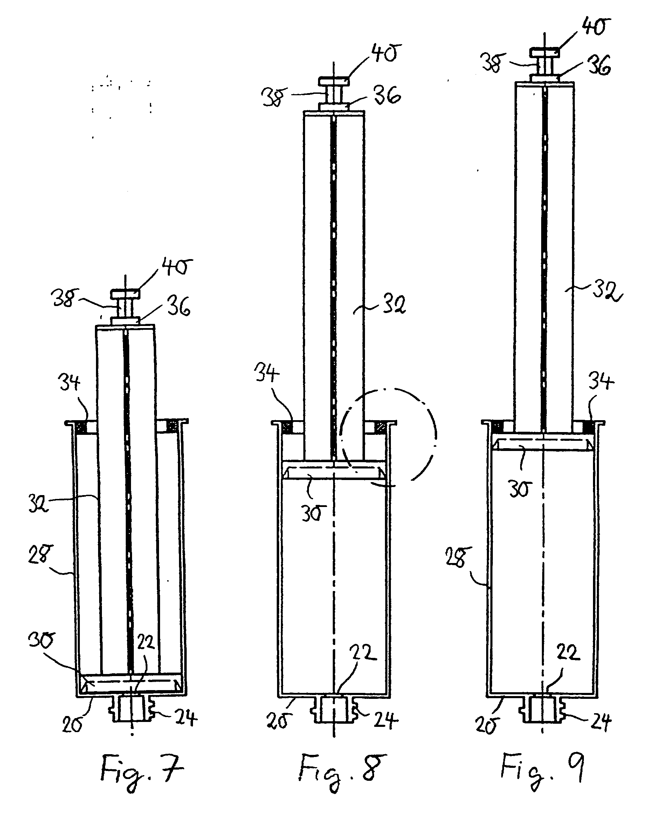

Wie in Fig. 2 und Fig. 8 gezeigt, hat der Kolben jenseits seines vollen Dosierhubs eine Fehlbedienungs-Hubreserve in dem Zylinder. Der Kolbenkopf 30 nimmt jenseits des vollen Dosierhubs eine Sicherungs-Anschlagstellung an dem Rückhaltering 34 ein.

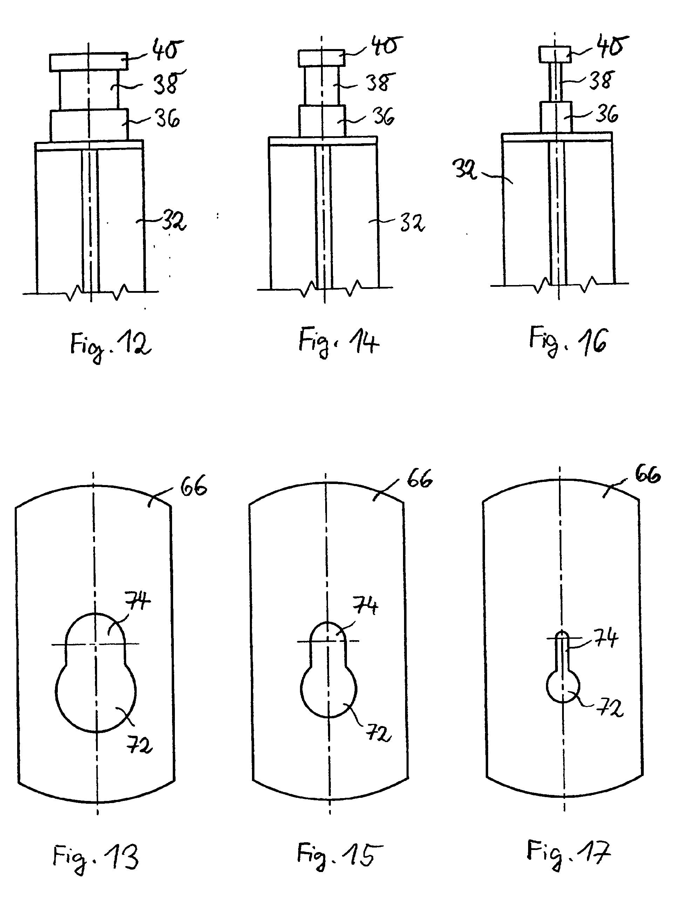

Wie in Fig. 12 bis Fig. 17 gezeigt, ist Kolben-Zylinder-Einheiten verschiedener Größe je eine Betätigungseinheit zugeordnet. Die Kolben-Zylinder-Einheiten sind hinsichtlich der Größe beschriftet. Die Betätigungseinheiten sind mit einer Skala für das jeweilige Ausgabevolumen versehen. Durch die Gestaltung der Fortsätze an der Kolbenstange 32 und der Schieberöffnungen der Betätigungseinheiten ist über die eindeutige Beschriftung hinaus sichergestellt, daß nur die jeweils richtige Betätigungseinheit an die Kolben-Zylinder-Einheit angekoppelt werden kann:

Bei der großen Kolben-Zylinder-Einheit gemäß Fig. 12 sind die Bunde 36, 40 und der Hals 38 an dem Fortsatz der Kolbenstange 32 im Durchmesser groß und die Öffnung in dem Schieber 66 der zugehörigen Betätigungseinheit entsprechend groß (vgl. Fig. 13).

Bei der mittelgroßen Kolben-Zylinder-Einheit gemäß Fig. 14 sind die Bunde 36, 40 und der Hals 38 an dem Fortsatz der Kolbenstange 32 im Durchmesser mittelgroß und die Öffnung in dem Schieber 66 der zugehörigen Betätigungseinheit entsprechend mittelgroß (vgl. Fig. 15).

Bei der kleinen Kolben-Zylinder-Einheit gemäß Fig. 16 sind die Bunde 36, 40 und der Hals 38 an dem Fortsatz der Kolbenstange 32 im Durchmesser klein und die Öffnung in dem Schieber 66 der zugehörigen Betätigungseinheit entsprechend klein (vgl. Fig. 17).

Der Bund 36, 40 an dem Fortsatz der Kolbenstange 32 einer größeren Kolben-Zylinder-Einheit paßt nicht in die Öffnung des Schiebers 66 einer Betätigungseinheit, die einer kleineren Kolben-Zylinder-Einheit zugeordnet ist. Eine größere Kolben-Zylinder-Einheit kann deshalb nicht fehlerhaft an eine Betätigungseinheit für eine kleinere Kolben-Zylinder-Einheit angekoppelt werden.

Ein Bund 36, 40 an dem Fortsatz der Kolbenstange 32 einer kleineren Kolben-Zylinder-Einheit paßt durch die Verengung 74 der Schieberöffnung einer Betätigungseinheit hindurch, die einer größeren Kolben-Zylinder-Einheit zugeordnet ist. Eine kleinere Kolben-Zylinder-Einheit kann deshalb nicht fehlerhaft an eine Betätigungseinheit für eine größere Kolben-Zylinder-Einheit angekoppelt werden.

### Liste der Bezugszeichen

- 10: Ventilgehäuse
- 12: Ansaugleitung
- 14: Ansaugventil
- 16: Kanüle
- 18: Ausstoßventil
- 20: Zylinderboden
- 22: Ansaug- und Ausstoßöffnung
- 24: Stutzen
- 26: Oberseite
- 28: Zylinderlaufbuchse
- 30: Kolbenkopf
- 32: Kolbenstange
- 34: Rückhaltering
- 36: unterer Bund
- 38: Hals
- 40: oberer Bund
- 42: Innenhülse
- 44: Außenhülse
- 46: Schraubendruckfeder
- 48: Gewindestutzen
- 50: innerer Führungsring
- 52: äußerer Führungsring
- 54: Ringraum
- 56: Kragen
- 58: Reiter
- 59: Langloch
- 60: Deckelplatte
- 62: Zylinderbuchse
- 64: Öffnung
- 66: Schieber
- 68: Noppen
- 70: Vertiefung
- 72: kreisrunder Öffnungsabschnitt
- 74: Verengung
- 76: Ringnut
- 78: Ringwulst
- 80: Haken
- 82: Rampe
- 84: Hinterschneidung
- 86: Widerhaken

## Patentansprüche

1. Flaschenaufsatzdispenser
mit einem Ventilgehäuse (10),
mit einer Kolben-Zylinder-Einheit (20, 28-32), deren Kolben (30, 32) und Zylinder (20, 28) in einer axialen Hubbewegung relativ zueinander betätigbar sind, um Flüssigkeit aus einer Flasche, auf der der Dispenser sitzt, anzusaugen und auszustoßen,
wobei der Zylinder (20, 28) der Kolben-Zylinder-Einheit (20, 28-32) am Ventilgehäuse (10) lösbar stationär angebracht ist,
wobei sich das Ansaugen in einer von einem auf den Kolben (30, 32) wirkenden Federelement (46) verursachten Ausfahrbewegung und das Ausstoßen in einer manuell betätigten Einfahrbewegung des Kolbens (30, 32) der Kolben-Zylinder-Einheit (20, 28-32) vollzieht,
wobei zwei einander koaxial umschließende Hülsen (42, 44) und das Federelement (46) in einer die Aus- und Einfahrbewegung des Kolbens (30, 32) verursachenden Betätigungseinheit zusammengefaßt sind,
wobei eine Hülse (42) am Ventilgehäuse (10) lösbar stationär angebracht ist,
wobei die andere Hülse (44) mit dem Kolben (30, 32) der Kolben-Zylinder-Einheit (20, 28-32) lösbar verbunden und gegenüber der einen Hülse (42) entsprechend der Aus- und Einfahrbewegung des Kolbens (30, 32) bewegbar ist,
wobei das Federelement (46) zwischen mit den Hülsen (42; 44) jeweils fest verbundenen Bauteilen (50, 52; 60, 62) der Betätigungseinheit verliersicher eingespannt ist, dergestalt, daß es bei Entfernen der Betätigungseinheit vom Ventilgehäuse (10) eingespannt bleibt,
wobei die Hülsen (42, 44) durch das Federelement (46) in Ausfahrrichtung axial vorgespannt sind und der maximale axiale Ausfahrhub der Hülsen (42, 44) anschlagbegrenzt ist und
wobei die Betätigungseinheit als Ganzes vom Ventilgehäuse (10) abnehmbar ist, so daß die Kolben-Zylinder-Einheit (20, 28-32) zugänglich wird.

2. Dispenser nach Anspruch 1, **dadurch gekennzeichnet,**
**daß** die am Ventilgehäuse 10 lösbar stationär angebrachte Hülse (42) die Innenhülse (42) und daß die mit dem Kolben (30, 32) lösbar verbundene Hülse (44) die Außenhülse (44) ist.

3. Dispenser nach Anspruch 1 oder 2, **dadurch gekennzeichnet,**
**daß** die Hülsen (42, 44) über den maximalen Hub der Kolben-Zylinder-Einheit (20, 28-32) Teleskopführung aneinander haben.

4. Dispenser nach einem der Ansprüche 1 bis 3, **dadurch gekennzeichnet,**
**daß** das Federelement (46) zum Ansaugen eine Schraubendruckfeder ist.

5. Dispenser nach einem der Ansprüche 1 bis 4, **dadurch gekennzeichnet,**
**daß** die Betätigungseinheit in koaxialer Anordnung über der an dem Ventilgehäuse (10) angebrachten Kolben-Zylinder-Einheit (20, 28-32) angeordnet ist.

6. Dispenser nach einem der Ansprüche 1 bis 5, **dadurch gekennzeichnet,**
**daß** die lösbare Verbindung zwischen der anderen Hülse (44) der Betätigungseinheit und dem Kolben (30, 32) in der maximalen Einfahrstellung der Einheiten herstellbar ist.

7. Dispenser nach Anspruch 6, **dadurch gekennzeichnet,**
**daß** die maximale Einfahrstellung der Einheiten eine verriegelte Ruhestellung des Dispensers ist.

8. Dispenser nach einem der Ansprüche 1 bis 7, **dadurch gekennzeichnet,**
**daß** der Ausfahrhub der anderen Hülse (44) der Betätigungseinheit durch einen Verstellanschlag (58) begrenzt ist.

9. Dispenser nach einem der Ansprüche 1 bis 8, **gekennzeichnet durch** eine Renkverbindung zwischen dem Zylinder (28) der Kolben-Zylinder-Einheit (20, 28-32) und dem Ventilgehäuse (10).

10. Dispenser nach einem der Ansprüche 1 bis 9, **dadurch gekennzeichnet,**
**daß** die eine Hülse (42) auf das Ventilgehäuse (10) aufgeschraubt ist und die andere Hülse (44) einen Schieber (66) trägt, der mit dem Kolben (30, 32) in lösbarem Halteeingriff steht.

11. Dispenser nach Anspruch 10, **dadurch gekennzeichnet,**
**daß** die Kolbenstange (32) des Kolbens (30, 32) mindestens einen abstehenden Bund (40) größeren Durchmessers und axial darunter einen Hals (38) kleineren Durchmessers hat und daß der Schieber (66) eine Öffnung (72) hat, durch die der Bund (40) in Lösestellung hindurchpaßt und die sich in Betätigungsrichtung zu einer Verengung (74) verengt, so daß in Haltestellung der Hals (38) hinein, nicht aber der Bund (40) hindurchpaßt.

12. Dispenser nach Anspruch 11, **dadurch gekennzeichnet,**
**daß** die Kolbenstange (32) des Kolbens (30, 32) Bunde (36, 40) beidseits des Halses (38) hat.

13. Dispenser nach einem der Ansprüche 10 bis 12, **dadurch gekennzeichnet,**
**daß** der Schieber (66) in Haltestellung und Lösestellung einrastet.

14. Dispenser nach einem der Ansprüche 11 bis 13, **dadurch gekennzeichnet,**
**daß** Kolben-Zylinder-Einheiten(20, 28-32) verschiedener Größe je eine Betätigungseinheit zugeordnet und vorzugsweise die Betätigungseinheit mit einer Skala für das jeweilige Ausgabevolumen versehen ist, und daß die Bunde (40) und Hälse (38) von Kolben-Zylinder-Einheiten (20, 28-32) verschiedener Größe im Durchmesser paarweise verschieden und die Öffnungen (72) in den Schiebern (66) der zugeordneten Betätigungseinheiten entsprechend verschieden groß sind, derart, daß ein zu großer Bund (40) nicht in die Öffnung hinein und ein zu kleiner Bund (40) durch die Verengung (74) der Öffnung (72) hindurchpaßt.

15. Dispenser nach einem der Ansprüche 1 bis 14, **dadurch gekennzeichnet,**
**daß** die Hülsen (42; 44) der Betätigungseinheit durchsichtig oder durchscheinend sind.

16. Dispenser nach einem der Ansprüche 1 bis 15, **gekennzeichnet durch** eine Kolben-Zylinder-Einheit in Form einer Spritze aus Kunststoff, bei der der Kolben aus dem Zylinder nicht herausziehbar ist.

17. Dispenser nach Anspruch 16, **dadurch gekennzeichnet,**
**daß** ein Rückhaltering (34) für den Kolben (30, 32) in den Zylinder (20, 28) eingelassen ist.

18. Dispenser nach Anspruch 17, **dadurch gekennzeichnet,**
**daß** der Kolben (30, 32) einen Kolbenkopf (30) und eine Kolbenstange (32) hat,
**daß** der Zylinder (20, 28) einen Zylinderboden (20) mit einer Ansaug- und Ausstoßöffnung (22) und eine Zylinderlaufbuchse (28) hat, in die der Kolbenkopf (30) unter Abdichtung paßt,
**daß** die Zylinderlaufbuchse (28) an ihrem vom Zylinderboden (20) abgewandten Ende eine Einbauöffnung für den Kolben (30, 32) hat,
**daß** der Rückhaltering (34) vor der Einbauöffnung liegt und
**daß** die Kolbenstange (32) durch den Rückhaltering (34) hindurchpaßt und vorzugsweise darin Führung hat.

19. Dispenser nach Anspruch 18, **dadurch gekennzeichnet,**
**daß** eher die Kolbenstange (32) zerreißt oder von dem Kolbenkopf (30) abreißt oder ein Anschlußverbindungsstutzen (24) der Spritze aus seinem Gegenstück reißt, als daß der Kolbenkopf (30) den Rückhaltering (34) überwindet.

20. Dispenser nach Anspruch 18 oder 19, **dadurch gekennzeichnet,**
**daß** der Rückhaltering (34) auf die Zylinderlaufbuchse (28) aufgeklipst oder in die Zylinderlaufbuchse (28) eingeklipst ist.

21. Dispenser nach einem der Ansprüche 18 bis 20, **dadurch gekennzeichnet,**
**daß** der Rückhaltering (34) mit der Zylinderlaufbuchse (28) verklebt oder verschweißt oder durch nachträgliche Verformung aus der Zylinderlaufbuchse (28) gebildet ist.

22. Dispenser nach einem der Ansprüche 16 bis 21, **dadurch gekennzeichnet,**
**daß** der Kolben (30, 32) eine Fehlbedienungs-Hubreserve in dem Zylinder (20, 28) hat, die ein Lösen der Betätigungseinheit von dem Ventilgehäuse (10) ermöglicht, während fehlerhafterweise die Verbindung zwischen der Betätigungseinheit und dem Kolben (30, 32) hergestellt ist, ohne daß der Kolbenkopf (30) dabei den Rückhaltering (34) erreicht.

## Claims

1. Bottle-mounted dispenser with a valve housing (10), with a piston-cylinder unit (20, 28 - 32), of which the pistons (30, 32) and cylinders (20, 28) can be actuated in an axial stroke movement relative to one another in order to draw in liquid from a bottle on which the dispenser rests and to expel said liquid, wherein the cylinder (20, 28) of the piston-cylinder unit (20, 28 - 32) is releasably attached, in a stationary position, to the valve housing (10), the drawing-in taking place in an extension movement caused by a spring element (46) acting on the piston (30, 32) and the expulsion taking place in a manually actuated retraction movement of the piston (30, 32) of the piston-cylinder unit (20, 28 - 32), two sleeves (42, 44) which surround each other coaxially and the spring element (46) being combined in an actuation unit causing the extension and retraction movement of the piston (30, 32), one sleeve (42) being releasably attached, in a stationary position, to the valve housing (10), the other sleeve (44) being releasably connected to the piston (30, 32) of the piston-cylinder unit (20, 28 - 32) and movable relative to the one sleeve (42) in accordance with the extension and retraction movement of the piston (30, 32), the spring element (46) being securely clamped between components (50, 52; 60, 62) of the actuation unit that are each rigidly connected to the sleeves (42; 44) in such a way that said spring element remains clamped on removal of the actuation unit from the valve housing (10), the sleeves (42, 44) being axially prestressed by the spring element (46) in the extension direction and the maximum axial extension stroke of the sleeves (42, 44) being limited by a stop, and the actuation unit being removable in its entirety from the valve housing (10), thus rendering the piston-cylinder unit (20, 28 - 32) accessible.

2. Dispenser according to Claim 1, **characterized in that** the sleeve (42), which is releasably attached, in a stationary position, to the valve housing (10), is the inner sleeve (42) and **in that** the sleeve (44), which is releasably connected to the piston (30, 32), is the outer sleeve (44).

3. Dispenser according to Claim 1 or 2, **characterized in that** the sleeves (42, 44) are guided telescopically on one another over the maximum stroke of the piston-cylinder unit (20, 28 - 32).

4. Dispenser according to one of Claims 1 to 3, **characterized in that** the spring element (46) for drawing-in is a helical compression spring.

5. Dispenser according to one of Claims 1 to 4, **characterized in that** the actuation unit is arranged in a coaxial arrangement above the piston-cylinder unit (20, 28 - 32) which is attached to the valve housing (10).

6. Dispenser according to one of Claims 1 to 5, **characterized in that** the releasable connection between the other sleeve (44) of the actuation unit and the piston (30, 32) can be produced in the maximum retraction position of the units.

7. Dispenser according to Claim 6, **characterized in that** the maximum retraction position of the units is a locked rest position of the dispenser.

8. Dispenser according to one of Claims 1 to 7, **characterized in that** the extension stroke of the other sleeve (44) of the actuation unit is limited by an adjustable stop (58).

9. Dispenser according to one of Claims 1 to 8, **characterized by** a bayonet connection between the cylinder (28) of the piston-cylinder unit (20, 28 - 32) and the valve housing (10).

10. Dispenser according to one of Claims 1 to 9, **characterized in that** one sleeve (42) is screwed onto the valve housing (10) and the other sleeve (44) carries a slide (66) which is in releasable holding engagement with the piston (30, 32).

11. Dispenser according to Claim 10, **characterized in that** the piston rod (32) of the piston (30, 32) has at least one projecting collar (40) with a larger diameter and, axially therebelow, a neck (38) with a smaller diameter and **in that** the slide (66) has an opening (72) through which the collar (40) fits in the release position and which narrows in the actuation direction to form a constriction (74), so that in the hold position the neck (38) fits in, but the collar (40) does not fit through.

12. Dispenser according to Claim 11, **characterized in** fact the piston rod (32) of the piston (30, 32) has collars (36, 40) on both sides of the neck (38).

13. Dispenser according to one of Claims 10 to 12, **characterized in that** the slide (66) locks into place in the hold position and the release position.

14. Dispenser according to one of Claims 11 to 13, **characterized in that** piston-cylinder units (20, 28 - 32) of differing size are each assigned an actuation unit and preferably the actuation unit is provided with a scale for the respective dispensing volume, and **in that** the collars (40) and necks (38) of piston-cylinder units (20, 28 - 32) of differing size differ in diameter, in pairs, and the openings (72) in the slides (66) of the associated actuation units are of accordingly differing sizes in such a way that an excessively large collar (40) does not fit into the opening and an excessively small collar (40) does not fit through the constriction (74) of the opening (72).

15. Dispenser according to one of Claims 1 to 14, **characterized in that** the sleeves (42; 44) of the actuation unit are transparent or translucent.

16. Dispenser according to one of Claims 1 to 15, **characterized by** a piston-cylinder unit in the form of a syringe which is made of plastics material and in which the piston cannot be pulled out of the cylinder.

17. Dispenser according to Claim 16, **characterized in that** a retainer ring (34) for the piston (30, 32) is countersunk into the cylinder (20, 28).

18. Dispenser according to Claim 17, **characterized in that** the piston (30, 32) has a piston head (30) and a piston rod (32), **in that** the cylinder (20, 28) has a cylinder bottom (20) with an intake and expulsion opening (22) and a cylinder liner (28) into which the piston head (30) fits, forming a seal, **in that** the cylinder liner (28) has at its end facing away from the cylinder bottom (20) an installation opening for the piston (30, 32), **in that** the retainer ring (34) lies in front of the installation opening and **in that** the piston rod (32) fits through the retainer ring (34) and is preferably guided therein.

19. Dispenser according to Claim 18, **characterized in that** it is more likely that the piston rod (32) will break or come off the piston head (30) or a connector piece (24) of the syringe will tear out of its counterpart than that the piston head (30) will overcome the retainer ring (34).

20. Dispenser according to Claim 18 or 19, **characterized in that** the retainer ring (34) is clipped onto the cylinder liner (28) or clipped into the cylinder liner (28).

21. Dispenser according to one of Claims 18 to 20, **characterized in that** the retainer ring (34) is glued or welded to the cylinder liner (28) or formed from the cylinder liner (28) by subsequent deformation.

22. Dispenser according to one of Claims 16 to 21, **characterized in that** the piston (30, 32) has a stroke reserve in the cylinder (20, 28), in case of incorrect operation, which allows a release of the actuation unit from the valve housing (10), while the connection between the actuation unit and the piston (30, 32) is produced in error, without the piston head (30) reaching the retainer ring (34) during this process.

## Revendications

1. Distributeur monté sur une bouteille,
comprenant
un boîtier de valve (10),
une unité cylindre-piston (20, 28-32), dont le piston (30, 32) et le cylindre (20, 28) peuvent être actionnés l'un par rapport à l'autre suivant un mouvement de levée axial, afin d'aspirer et d'expulser du liquide d'une bouteille sur laquelle repose le distributeur,
le cylindre (20,28) de l'unité cylindre-piston (20, 28-32) étant monté sur le boîtier de valve (10) de manière fixe et détachable,
l'aspiration se produisant dans un mouvement de sortie provoqué par un élément de ressort (46) agissant sur le piston (30, 32) et l'expulsion se produisant dans un mouvement d'enfoncement manuel du piston (30, 32) de l'unité cylindre-piston (20, 28-32),
deux douilles (42, 44) s'entourant coaxialement l'une et l'autre et l'élément de ressort (46) étant rassemblés dans une unité d'actionnement provoquant le mouvement de sortie et d'enfoncement du piston (30, 32),
une douille (42) étant montée sur le boîtier de valve (10) de manière fixe et détachable,
l'autre douille (44) étant connectée de manière détachable au piston (30, 32) de l'unité cylindre-piston (20, 28-32) et pouvant être déplacée par rapport à la première douille (42) en fonction du mouvement de sortie et d'enfoncement du piston (30, 32),
l'élément de ressort (46) étant serré de manière imperdable entre des composants (50, 52 ; 60, 62) de l'unité d'actionnement, connectés à chaque fois fixement aux douilles (42, 44), de telle sorte qu'il reste serré lors de l'enlèvement de l'unité d'actionnement du boîtier de valve (10),
les douilles (42, 44) étant précontraintes axialement dans la direction de sortie par l'élément de ressort (46), et la course de sortie axiale maximale des douilles (42, 44) étant limitée par une butée et
l'unité d'actionnement pouvant être enlevée d'un bloc hors du boîtier de valve (10), de sorte que l'on puisse accéder à l'unité cylindre-piston (20, 28-32).

2. Distributeur selon la revendication 1, **caractérisé en ce que**
la douille (42) montée de manière fixe et détachable sur le boîtier de valve (10) est la douille intérieure (42) et **en ce que** la douille (44) connectée de manière détachable au piston (30, 32) est la douille extérieure (44).

3. Distributeur selon la revendication 1 ou 2, **caractérisé en ce que**
les douilles (42, 44) présentent l'une par rapport à l'autre un guidage télescopique sur la course maximale de l'unité cylindre-piston (20, 28-32).

4. Distributeur selon l'une quelconque des revendications 1 à 3, **caractérisé en ce que** l'élément de ressort (46) pour l'aspiration est un ressort de compression à boudin.

5. Distributeur selon l'une quelconque des revendications 1 à 4, **caractérisé en ce que** l'unité d'actionnement est disposée suivant un agencement coaxial au-dessus de l'unité cylindre-piston (20, 28-32) montée sur le boîtier de valve (10).

6. Distributeur selon l'une quelconque des revendications 1 à 5, **caractérisé en ce que** la connexion détachable entre la deuxième douille (44) de l'unité d'actionnement et le piston (30, 32) peut être établie dans la position enfoncée au maximum des unités.

7. Distributeur selon la revendication 6, **caractérisé en ce que**
la position enfoncée au maximum des unités est une position de repos verrouillée du distributeur.

8. Distributeur selon l'une quelconque des revendications 1 à 7, **caractérisé en ce que** la course de sortie de la deuxième douille (44) de l'unité d'actionnement est limitée par une butée de réglage (58).

9. Distributeur selon l'une quelconque des revendications 1 à 8, **caractérisé par** une connexion à baïonnette entre le cylindre (28) de l'unité cylindre-piston (20, 28-32) et le boîtier de valve (10).

10. Distributeur selon l'une quelconque des revendications 1 à 9, **caractérisé en ce que** la première douille (42) est vissée sur le boîtier de valve (10) et la deuxième douille (44) porte un coulisseau (66) qui est en prise de fixation détachable avec le piston (30, 32).

11. Distributeur selon la revendication 10, **caractérisé en ce que**
la tige de piston (32) du piston (30, 32) présente au moins un épaulement saillant (40) de plus grand diamètre et en dessous, axialement, un col (38) de plus petit diamètre, et **en ce que** le coulisseau (66) présente une ouverture (72) à travers laquelle l'épaulement (40) passe dans la position de libération, et qui se rétrécit dans la direction d'actionnement jusqu'à une constriction (74), de sorte que dans la position de fixation, le col (38) puisse passer, mais pas l'épaulement (40).

12. Distributeur selon la revendication 11, **caractérisé en ce que**
la tige de piston (32) du piston (30, 32) présente des épaulements (36, 40) de part et d'autre du col (38).

13. Distributeur selon l'une quelconque des revendications 10 à 12, **caractérisé en ce que** le coulisseau (66) s'encliquète dans la position de fixation et dans la position de libération.

14. Distributeur selon l'une quelconque des revendications 11 à 13, **caractérisé en ce que** des unités cylindre-piston (20, 28-32) de différentes tailles sont associées à une unité d'actionnement respective, et l'unité d'actionnement est de préférence pourvue d'une échelle pour le volume respectif distribué, et **en ce que** les épaulements (40) et les cols (38) des unités cylindre-piston (20, 28-32) de différentes tailles ont des diamètres différents par paire, et les ouvertures (72) dans les coulisseaux (66) des unités d'actionnement associées ont différentes tailles en conséquence, de telle sorte qu'un épaulement (40) trop grand n'entre pas dans l'ouverture, et qu'un épaulement (40) trop petit passe à travers la constriction (74) de l'ouverture (72).

15. Distributeur selon l'une quelconque des revendications 1 à 14, **caractérisé en ce que** les douilles (42 ; 44) de l'unité d'actionnement sont transparentes ou translucides.

16. Distributeur selon l'une quelconque des revendications 1 à 15, **caractérisé par** une unité cylindre-piston en forme de seringue en plastique, le piston ne pouvant pas être retiré du cylindre.

17. Distributeur selon la revendication 16, **caractérisé en ce qu'**
une bague de retenue (34) pour le piston (30, 32) est encastrée dans le cylindre (20, 28).

18. Distributeur selon la revendication 17, **caractérisé en ce que** le piston (30, 32) présente une tête de piston (30) et une tige de piston (32), **en ce que** le cylindre (20, 28) présente un fond de cylindre (20) avec une ouverture d'aspiration et d'expulsion (22) et une boîte de glissement de cylindre (28), dans laquelle la tête de piston (30) s'adapte de manière étanche,
**en ce que** la boîte de glissement de cylindre (28) présente, à son extrémité opposée au fond de cylindre (20), une ouverture d'insertion pour le piston (30, 32),
**en ce que** la bague de retenue (34) est située avant l'ouverture d'insertion et
**en ce que** la tige de piston (32) traverse la bague de retenue (34) et présente de préférence un guidage intérieur.

19. Distributeur selon la revendication 18, **caractérisé en ce que**
la tige de piston (32) sera cassée ou arrachée de la tête de piston (30), ou une tubulure de connexion de raccordement (24) sectionnera la seringue de sa pièce conjuguée, plutôt que la tête de piston (30) ne surmontera la bague de retenue (34).

20. Distributeur selon la revendication 18 ou 19, **caractérisé en ce que** la bague de retenue (34) est enclipsée sur la boite de glissement de cylindre (28) ou est enclipsée dans la boîte de glissement de cylindre (28).

21. Distributeur selon l'une quelconque des revendications 18 à 20, **caractérisé en ce que** la bague de retenue (34) est collée ou soudée à la boite de glissement de cylindre (28) ou est formée par une déformation ultérieure de la boîte de glissement de cylindre (28).

22. Distributeur selon l'une quelconque des revendications 16 à 21, **caractérisé en ce que** le piston (30, 32) présente une réserve de course en cas de mauvaise manipulation dans le cylindre (20, 28), qui permet une libération de l'unité d'actionnement du boîtier de valve (10) tandis qu'en cas d'erreur de manipulation la connexion entre l'unité d'actionnement et le piston (30, 32) est établie sans que la tête de piston (30) n'atteigne ainsi la bague de retenue (34).
